(19) **Europäisches Patentamt / European Patent Office / Office européen des brevets**

(11) **EP 2 742 443 B1**

(12) **EUROPEAN PATENT SPECIFICATION**

(45) Date of publication and mention of the grant of the patent:
**17.04.2019  Bulletin 2019/16**

(21) Application number: **12724966.2**

(22) Date of filing: **29.05.2012**

(51) Int Cl.:
*G06F 17/30* (2006.01)

(86) International application number:
**PCT/EP2012/060026**

(87) International publication number:
**WO 2013/029817 (07.03.2013 Gazette 2013/10)**

(54) **DATABASE RECORD REPAIR**

REPARATUR VON DATENBANKSÄTZEN

RÉPARATION D'ENREGISTREMENTS DE BASE DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2011  GB 201114744**

(43) Date of publication of application:
**18.06.2014  Bulletin 2014/25**

(73) Proprietor: **Qatar Foundation Doha (QA)**

(72) Inventors:
- **KALDAS, Ihab Francis Ilyas**
  **Waterloo**
  **Ontario N2T 1R4 (CA)**
- **YAKOUT, Mohamed**
  **Doha (QA)**
- **ELMAGARMID, Ahmed**
  **Doha (QA)**

(74) Representative: **Hoarton, Lloyd Douglas Charles**
**Forresters IP LLP**
**Skygarden**
**Erika-Mann-Strasse 11**
**80636 München (DE)**

(56) References cited:
**US-A1- 2008 288 482**

- **Kollayut Kaewbuadee, Yaowadee Temtanapat and Ratchata Peachavanish: "DATA CLEANING USING FD FROM DATA MINING PROCESS", , 16 May 2006 (2006-05-16), XP7920865, Retrieved from the Internet: URL:http://www.iadis.org/Multi2006/Papers/ 16/F026_DS.pdf [retrieved on 2012-07-24]**
- **Müller, H; Freytag, J: "Problems, Methods, and Challenges in Comprehensive Data Cleansing", , 2003, XP007920863, Retrieved from the Internet: URL:http://www.dbis.informatik.hu-berlin.d e/fileadmin/research/papers/techreports/20 03-hub_ib_164-mueller.pdf [retrieved on 2012-07-24]**
- **George Beskales, Mohamed A. Soliman, Ihab F. Ilyas and Shai Ben-David: "Modeling and Querying Possible Repairs in Duplicate Detection", , August 2009 (2009-08), XP002680770, Retrieved from the Internet: URL:http://www.cs.uwaterloo.ca/~gbeskale/B eskalesVLDB2009.pdf [retrieved on 2012-07-23]**
- **George Beskales, Ihab F. Ilyas, and Lukasz Golab: "Sampling the Repairs of Functional Dependency Violations under Hard Constraints", , September 2010 (2010-09), XP002680771, Retrieved from the Internet: URL:http://www.cs.uwaterloo.ca/~gbeskale/B eskales_VLDB2010.pdf [retrieved on 2012-07-23]**

**Description**

The present invention relates to database record repair.

BACKGROUND

A database is a collection of information arranged in an organized manner. A typical database might include medical, financial or accounting information, demographics and market survey data, bibliographic or archival data, personnel and organizational information, public governmental records, private business or customer data such as addresses and phone numbers, etc.

Such information is usually contained in computer files arranged in a preselected database format, and the data contents within them can be maintained for convenient access on magnetic media, both for storage and for updating the file contents as needed.

Poor data quality can have undesirable implications for the effectiveness of a business or other organization or entity. For example, in healthcare, where incorrect information about patients in an Electronic Health Record (EHR) may lead to wrong treatments and prescriptions, ensuring the accuracy of database entries is of prime importance.

A large variety of computational procedures for cleaning or repairing erroneous or duplicate entries in databases have been proposed. Typically, such procedures can automatically or semi-automatically identify errors and, when possible, correct them. Typically, however, these approaches have several limitations relating to the introduction of new database errors as a result of changes that have been made. For example, a repair in order correct a functional dependency problem may lead to duplication errors. Similarly, deduplication can lead to functional dependency violations within a database.

A conventional data cleaning method is described in Kollayut Kaewbuadee, Yaowadee Temtanapat and Ratchata Peachavanish: "DATA CLEANING USING FD FROM A DATA MINING PROCESS", 16 May 2006 (2006-05-16).

SUMMARY

According to one aspect of the present invention, there is provided a method as defined in claim 1 hereinafter.

According to another aspect of the present invention, there is provided a computer program embedded on a non-transitory tangible computer readable storage medium as defined in claim 3 hereinafter.

According to further aspect of the present invention, there is provided an apparatus as defined in claim 5 hereinafter.

BRIEF DESCRIPTION OF THE DRAWINGS

Figure 1 is a schematic representation of a small database instance;

Figure 2 is a schematic block diagram of a method according to an example;

Figure 3 is a flowchart of a method according to an example; and

Figure 4 is a schematic block diagram of an apparatus according to an example.

DETAILED DESCRIPTION

According to an example, there is provided a method for repairing records of a database that can be inconsistent, incorrect or missing due to duplication and inconsistencies with respect to integrity constraints of the database. Accordingly, deduplication can be performed, which determines and merges duplicate records, as well as the repairing of functional dependency (FD) violations.

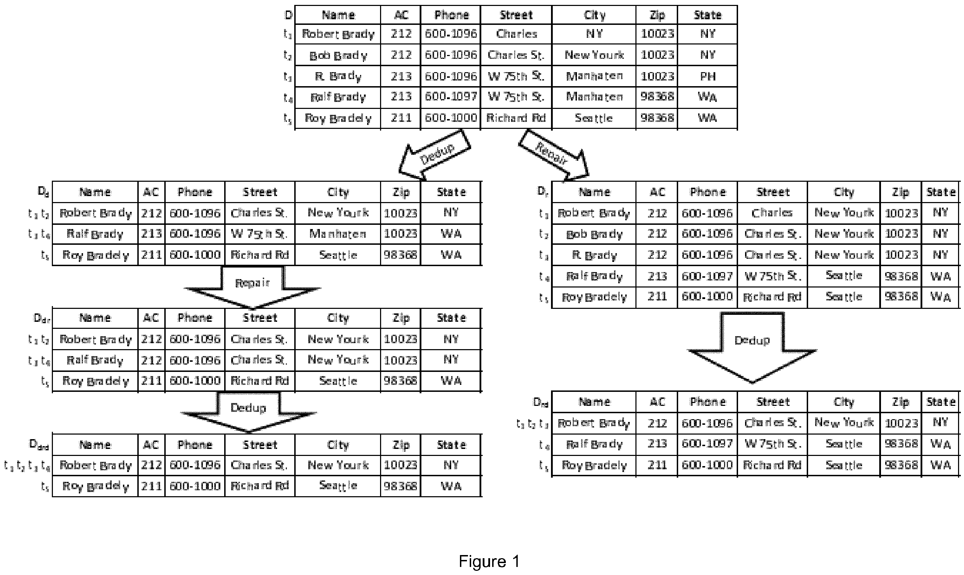

Deduplication utilises a measure of similarity or closeness between records in a database to determine candidacy for duplicates. FD repair utilises the notion that the minimal amount of changes to make a database consistent are more likely to be correct. However, when the two tasks are applied one after the other (e.g., deduplication and then data repair), it is atypical for the resultant database to be consistent and free of duplicates because, after FD repair, records can change and new duplicate records may emerge. Further, after deduplication and the merging of duplicates, violations to constraints may emerge in the database. The interaction between the two problems is illustrated in figure 1 which is a schematic representation of a small database instance.

The database of Figure 1 includes records that relate personal information of certain people. That is, the database attributes are: Name, telephone information: area code (AC) and Phone; address information: Street, City, State and Zip. In connection with the example of figure 1, there are defined a set of functional dependency constraints, $F_1$, $F_2$ and $F_3$:

$F_1$: City, Phone $\rightarrow$ AC, Street, Zip, State

$F_2$: Zip $\rightarrow$ City, State

$F_3$: Street, City $\rightarrow$ Zip

The initial instance of the database of figure is D, which contains violations with respect to the specified FDs. For example, records $t_2$ and $t_3$ violate $F_2$ since they agree on the Zip attribute, but do not agree on the City and State attributes. Similarly, $t_3$ and $t_4$ violate $F_3$. Also note that D contains duplicate records. For example, $t_1$ and $t_2$ are candidates to be duplicates due to the similarities between their attributes values.

In order to repair the database instance D, a deduplication operation could be applied. In this case, instance $D_d$ would be obtained. The deduplication considers that $\{t_1, t_2\}$ and $\{t_3, t_4\}$ are two clusters of duplicate records due to the similarity between the attributes values, while $\{t_5\}$ remains in a cluster by itself. The instance $D_d$ is arrived at by merging each cluster of duplicates.

After a deduplication step, $D_d$ is inconsistent with respect to the FDs, since the two resulting records from the merge of $\{t_1, t_2\}$ and $\{t_3, t_4\}$ violate $F_2$. Therefore, the violations now need to be repaired. Violations with respect to $F_2$ can be resolved by making the affected records agree on City and State attributes, which in turn triggers another violation to $F_1$ to be resolved by making the records $\{t_1, t_2\}$ and $\{t_3, t_4\}$ agree on the AC and Street attributes. Finally, the instance $D_{dr}$ (D after applying deduplication followed by an FD repair) is obtained. Applying a deduplication operation to instance $D_{dr}$ reveals that the records $\{t_1, t_2\}$ and $\{t_3, t_4\}$ are duplicates after the repair, and they should be merged to finally obtain the instance $D_{drd}$.

Returning back to the original instance D and assuming that constraints violations are repaired first, one possible repair is shown in instance $D_r$. Note that in $D_r$, records $\{t_1, t_2, t_3\}$ are more likely to be duplicates due to the similarity of their attributes values, and both $t_4$ and $t_5$ appear to be distinct records. By merging the records of $\{t_1, t_2, t_3\}$ instance $D_{rd}$ is obtained. The example of figure 1 therefore shows that deduplication may cause violation of database constraints and that the repair of constraints violations may cause new candidate duplicates to appear in a database instance.

The illustrated interaction between the two problems indicates that deduplication and merging records should be aware of the constraints and consistency of the database, while repairing FD inconsistency should be aware of the identified duplicates. As illustrated in the example of figure 1, the sequence of applying FD repair and deduplication affects the final database instance obtained. The space of possible clean instances is exponential because of the number of possibilities for repairing FD violations and the number of ways to merge duplicate records. According to an example, there is provided a method for generating a set of updates for a database that seeks a clean instance with minimum distance from the original database instance. In an example, a clean instance of a database is free from FD violations and unwanted duplicate records.

In an example, a database instance D over a relation schema R is considered, with attr(R) denoting its set of attributes. The domain of an attribute $A \in$ attr(R) is denoted by dom(A). A set of constraints $\Sigma$ is defined over R in the form of a set of FDs, and t[A] denotes the value of a given attribute $A \in$ attr(R) in a database record t. An FD has the form of X $\rightarrow$ Y, where X $\subset$ attr(R) (left hand side, LHS) and Y $\subset$ attr(R) (right hand side, RHS) are subsets of the attributes attr(R). An instance D satisfies an FD, F:X $\rightarrow$ Y if, for every pair of records $t_1, t_2 \in D$ $t_1[X] = t_2[X]$, then $t_1[Y] = t_2[Y]$. A database instance D is said to satisfy the constraints $\Sigma$ if it satisfies every FD F $\in \Sigma$.

In an example, FD violations can be resolved as follows. Given $t_1, t_2$ that violate FD X $\rightarrow$ Y (or $t_1, t_2 | \neq F$) because $t_1[X] = t_2[X]$, but $t_1[Y] \neq t_2[Y]$, either modify $t_1[Y]$ such that $t_1[Y] = t_2[Y]$ or change the values of $t_1[X]$ such that $t_1[X] \neq t_2[X]$. For example, in instance D of figure 1, $\{t_1, t_2\}$ violate $F_2$. To resolve this violation, a modification can be performed so that $t_1$[City] is changed to 'New York' or $t_2$[Zip] is changed to a value which is not equal to '10023'.

In an example, respective clusters of candidate duplicate records can be merged (or fused) into a single record using a merging function using any one of several techniques that have been proposed to detect duplicate records. Typically, the merging of duplicate records will result in a record that is close to all the records within the cluster in question. Accordingly, a deduplication mechanism *Dup* operates to partition a database instance D into a set of clusters Dup(D) = $\{C_1, C_2, ..., C_m\}$ such that $D = \cup_{\forall i} C_i$. A merger M of a cluster C of duplicate records picks a value $v_A$ for each attribute such that t[A] = $v_A$ for all $t \in C$. For example, in the instance D of Figure 1, $t_1$ and $t_2$ may be in a cluster of duplicates. In the instance $D_d$, a single record replacement for the two records is constructed from $\{t_1, t_2\}$. In an example, a deduplication mechanism can be any suitable deduplication mechanism suitable for determining candidate duplicate entries for records of a database.

According to an example, a link between deduplication and FD repair occurs in that both define equivalence between attribute values. For a cluster of duplicate records, all their attributes values should typically be equivalent. That is, for an attribute $A \in$ attr(R), t[A] should be the same for all $t \in C$, where C is a cluster of duplicates. On the other hand, consider an FD F : $X \rightarrow Y$. If there is a group of records S where t[X] are the same for all $t \in S$, then t[Y] should be equivalent and have the same value for all $t \in S$.

Equivalence due to deduplication is conditioned based on decisions obtained from a deduplication mechanism, *Dup,* which depends on the attribute values of records. Equivalence due to FDs is conditioned based on the equality of the LHS attribute values. Such equivalence can be represented in an equivalence relation that involves complex dependencies.

According to an example, a method for repairing a database provides a modified database instance D' such that:

1. $|D'| \leq |D|$;

2. D' satisfies the constraints $\sum$

3. $|Dup(D')| = |D'|$; and

4. D' is produced by introducing minimal changes to D

That is, in terms of item 3, applying the deduplication mechanism *Dup* on D does not detect new duplicates. A data cleaning process to get D' from D requires a sequence of value modification operations and the replacement of duplicates with a single record. According to an example, the cost of a cleaning process to repair a database in order to arrive at a modified instance can be defined as:

$$Cost(D, D') = \sum_{\forall t \in D, M(t) = t' \in D', A \in attr(R)} dist_A(t[A], t'[A])$$

where M(t) maps $t \in D$ to the record $t' \in D'$, which is the corresponding record for t after merge and repair operations. Note that merging a cluster of duplicate records has the cost of modifying all the records values to the same value.

The function $dist_A(t[A], t'[A])$ is a distance function for the domain values of attribute A that, in an example, returns a score between 0 and 1, where 0 signifies an exact match. Examples of distance functions include the Edit distance and Jaro for string attributes; and the normalized distance for numerical attributes. That is, given two numbers $\{a, b\} \in$ dom(A), $dist_A(a, b) = (|a-b|)/(max(A)-min(A))$, where max(A) and min(A) are the maximum and minimum values in dom(A), respectively. Other alternatives are possible as will be appreciated.

According to an example, an FD repair is determined by performing a minimal amount of changes to a database instance in order to make it consistent or clean, thereby resulting in a modified database instance. In terms of merging a cluster of duplicate records, a single record is determined which is used as a replacement for the corresponding cluster of records. Typically, the record that is close to all the records within the cluster is the selected one. Implicitly, this can be interpreted as finding the minimal amount of changes to attributes' values to make the records within a cluster identical. Accordingly, given a database D, a duplication mechanism *Dup* and a set of constraints $\sum$, a method according to an example determines a modified database instance D' for which the cost associated with arriving at the modification, *Cost*(D, D'), is a minimum.

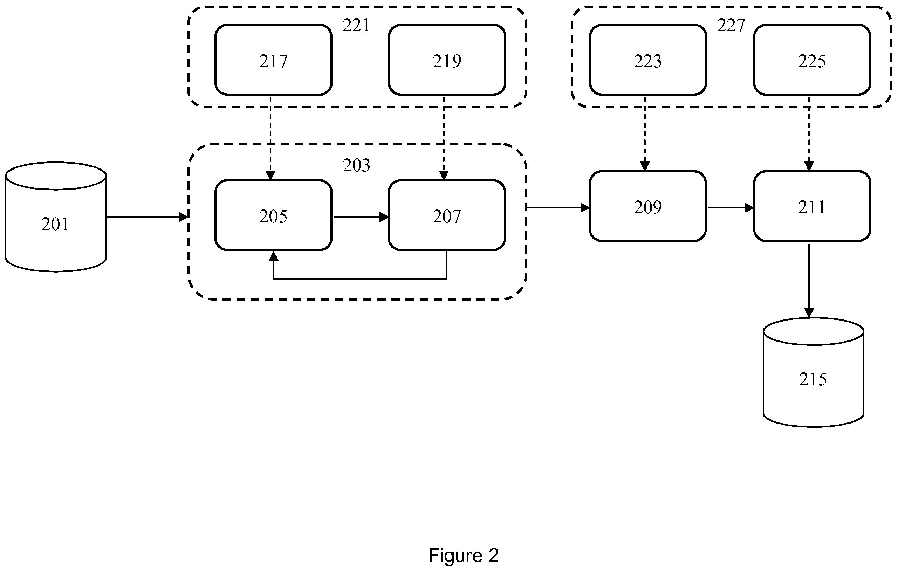

Figure 2 is a schematic block diagram of a method according to an example. A database 201 can be a database D as described above. That is, database 201 includes a relation schema R for example and a number of records which violate certain functional definitions for the database and which includes a number of duplicate records, which can be duplicates where attribute values match or are similar, where a measure of similarity can be determined using a distance function for example.

According to an example, a database 201 can be initially repaired such that it is consistent with respect to a set of given FDs. Accordingly, in block 203 a repair operation can be performed on database 201. That is, records which violate one or more functional dependencies are determined in block 205, and the determined records are repaired in block 207. Since the repair in block 207 may give rise to further violations of functional dependencies, the process can be repeated until no functional definition violations are present.

The output consistent database instance can then be used in the process of identifying duplicate records to be merged in block 209. A merger can result in a new record that is composed of a combination of attributes values of the original records that are being merged. Therefore, a simple merge for the duplicate records may introduce violations to the given FDs.

Accordingly, a consistency aware merger (CAM) of a set of records can be used in the example. The main purpose is to produce a consistent database while making all identified clusters of duplicates identical, such that the final repaired database instance can be constructed, such as by using a "select distinct" SQL statement for example.

A database instance D', which is arrived at as a result of a CAM to an instance D, is defined in an example as a database in which:

- all records in D are moved to D'

- D' satisfies the constraints $\sum$, and

- for each cluster of duplicates C $\in$ Dup(D), C's records appear identical in D'

According to an example, the requirements for D' are further qualified such that, given a database D, a duplication mechanism Dup and a set of constraints $\sum$, a cost associated with arriving at a modified database instance D', Cost(D, D'), is minimised.

If the database D is consistent (after repairing the FD violations), then, according to an example, a record t from each cluster C is selected and $t'=t\forall t' \in C$. That is, the records of C are made identical to the selected record t. The output of the merger is thus consistent with respect to the given FDs.

The selected record, which is used to represent the cluster may not be the best representation for the entity. Typically, the record that is close to all the records within the clusters is a good representation, and moreover, it will encounter the least amount of changes to the cluster of records to make them identical.

According to an example, identified duplicates can be considered as additional constraints to be considered as well as $\sum$ when repairing a database. Since deduplication identifies equivalence between attributes' values for a given cluster of duplicates, similarly, the FD defines equivalence between the RHS attributes conditioned on the equality on the LHS attributes. Accordingly, a consistency aware merger can be encoded into a single FD repair problem by defining identified duplicates as an additional FD constraint, such that, in order to arrive at a modified database instance, a method can include the steps:

1. Construct a new instance D" with the new relation R" such that:

2. R" is the same as R after addition a new attribute D_id.

3. For each cluster i of duplicate records $C_i$, set t[D_id] = i in D", i = 1...m.

4. Consider the new set of constraints $\sum$ " = $\sum \cup$ {FD : D_id $\rightarrow$ attr(R)}.

A method according to an example finds an FD repair for D" without changing the attribute D_id. Then, for the constraints $\sum$" the duplicate records are determined while maintaining D" |= $\sum$ in block 211. The modified database instance D" is determined by dropping the attribute D_id from the modified instance.

The first step to repair the FD violations in a repair-first data cleaning process is not informed by or dependent on the existence of duplicates however. The initial FD repair will find minimal changes to make the data consistent - however, if informed by the existence of duplicates, FD repair can help improve the accuracy of the identified clusters of duplicate records.

In an example, functional dependency violation identification in block 205 can be performed using an FD detection engine 217. The repair of records exhibiting functional dependency violations in block 207 can be performed using an FD repair engine 219. Engines 217, 219 can form a first module 221 for detecting and repairing FD violations using one of the techniques described above.

Identification of duplicate records in block 209 can be performed using a duplicate detection engine 223 which can execute the Dup function described above. Repair of a database instance in which duplicates are clustered, in block 211, can be performed using a consistency aware repair engine 225. Engines 223, 225 can form a consistency aware detection and repair module 227. The end result is a modified database instance 215 in which functional dependency violations and duplicates are repaired.

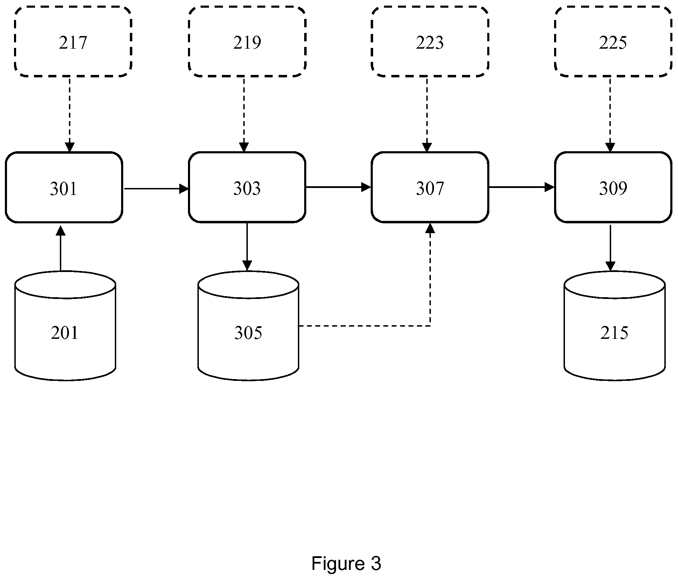

Figure 3 is a flowchart of a method according to an example. A database 201 includes multiple records which can include records which are duplicates and/or which violate one or more functional dependencies of the database as described above. In block 301 a first set of records of the database which violate a functional dependency are determined using engine 217 for example. In block 303 the records in the first set are modified in order to make them consistent with the functional dependency and to provide an output consistent database instance 305, such as by using engine 219 for example. In an example, the repair of records can proceed according to the techniques described above. In block 307 a second set of records of the output consistent database instance comprising duplicate records is determined, for example, using the *Dup* function described above which can be executed using engine 223 for example. In block 309 duplicate records in the second set are merged in dependence on the functional dependencies of the records to provide a modified database instance 215 using engine 225 for example.

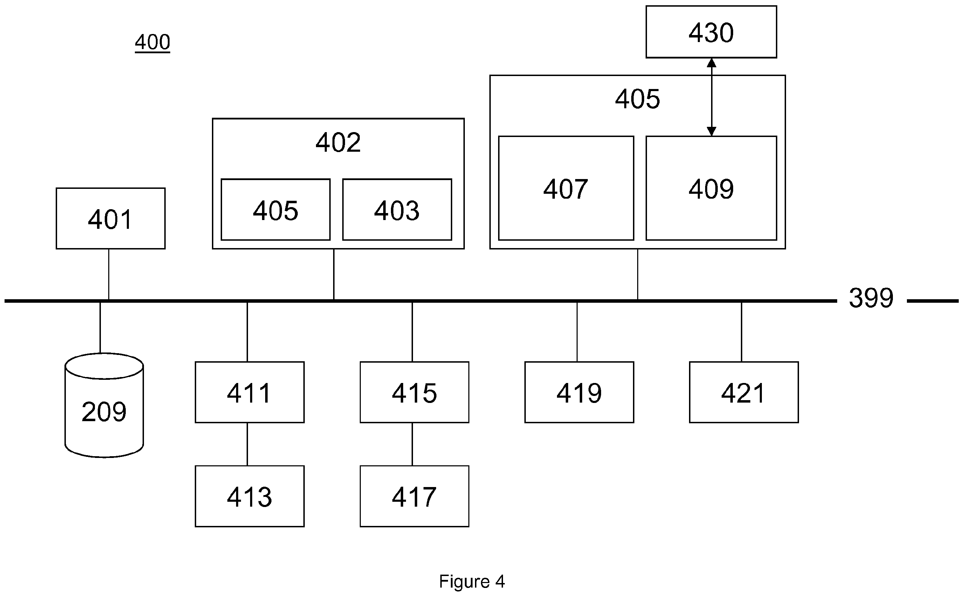

Figure 4 is a schematic block diagram of an apparatus according to an example suitable for implementing any of the system or processes described above. Apparatus 400 includes one or more processors, such as processor 401, providing an execution platform for executing machine readable instructions such as software. Commands and data from the processor 401 are communicated over a communication bus 399. The system 400 also includes a main memory 402, such as a Random Access Memory (RAM), where machine readable instructions may reside during runtime, and a secondary memory 405. The secondary memory 405 includes, for example, a hard disk drive 407 and/or a removable storage drive 430, representing a floppy diskette drive, a magnetic tape drive, a compact disk drive, etc., or a nonvolatile memory where a copy of the machine readable instructions or software may be stored. The secondary memory 405 may also include ROM (read only memory), EPROM (erasable, programmable ROM), EEPROM (electrically erasable, programmable ROM). In addition to software, data representing any one or more of updates, possible updates or candidate replacement entries, and listings for identified tuples may be stored in the main memory 402 and/or the secondary memory 405. The removable storage drive 430 reads from and/or writes to a removable storage unit 409 in a well-known manner.

A user interfaces with the system 400 with one or more input devices 411, such as a keyboard, a mouse, a stylus, and the like in order to provide user input data. The display adaptor 415 interfaces with the communication bus 399 and the display 417 and receives display data from the processor 401 and converts the display data into display commands for the display 417. A network interface 419 is provided for communicating with other systems and devices via a network (not shown). The system can include a wireless interface 421 for communicating with wireless devices in the wireless community.

It will be apparent to one of ordinary skill in the art that one or more of the components of the system 400 may not be included and/or other components may be added as is known in the art. The system 400 shown in figure 4 is provided as an example of a possible platform that may be used, and other types of platforms may be used as is known in the art. One or more of the steps described above may be implemented as instructions embedded on a computer readable medium and executed on the system 400. The steps may be embodied by a computer program, which may exist in a variety of forms both active and inactive. For example, they may exist as software program(s) comprised of program instructions in source code, object code, executable code or other formats for performing some of the steps. Any of the above may be embodied on a computer readable medium, which include storage devices and signals, in compressed or uncompressed form. Examples of suitable computer readable storage devices include conventional computer system RAM (random access memory), ROM (read only memory), EPROM (erasable, programmable ROM), EEPROM (electrically erasable, programmable ROM), and magnetic or optical disks or tapes. Examples of computer readable signals, whether modulated using a carrier or not, are signals that a computer system hosting or running a computer program may be configured to access, including signals downloaded through the Internet or other networks. Concrete examples of the foregoing include distribution of the programs on a CD ROM or via Internet download. In a sense, the Internet itself, as an abstract entity, is a computer readable medium. The same is true of computer networks in general. It is therefore to be understood that those functions enumerated above may be performed by any electronic device capable of executing the above-described functions.

A database 209 is shown in figure 4 as a standalone database connected to bus 399. However, it can be a database which can be queried and have data written to it from a remote location using the wired or wireless network connections mentioned above. Alternatively, database 209 may be stored in memory 405, such as on a HDD of system 400 for example.

Any one or more of the engines in modules 221, 227 of figure 2 can be implemented in memory 302 as modules 403, 405 for example.

## Claims

1. A computer implemented method for repairing records of a database, comprising:

   determining duplicate records in a first database instance D over a first relation schema R with attributes attr(R) and with a set of functional dependency constraints $\Sigma$ using a deduplication mechanism to group duplicate records into respective clusters $C_i$, i=1...m, wherein records within respective ones of the clusters represent the same entity;
   constructing a new instance D" with a new relation schema R", wherein the new relation schema R" is the same as the relation schema R with the addition of a new duplicate identification attribute D_id wherein D_id is set to i for each record in its corresponding cluster $C_i$; and

merging duplicate records of the new instance D" in dependence on the functional dependencies of a new set of constraints $\Sigma$" = $\Sigma \cup$ {FD : D_id $\rightarrow$ attr(R)} without changing the attribute D_id.

2.  A method as claimed in claim 1, wherein the modified database instance does not include the duplicate identification attribute.

3.  A computer program embedded on a non-transitory tangible computer readable storage medium, the computer program including machine readable instructions that, when executed by a processor, implement a method for updating a database comprising:

    determining duplicate records in a first database instance D over a first relation schema R with attributes attr(R) and with a set of functional dependency constraints $\Sigma$ using a deduplication mechanism to group duplicate records into respective clusters $C_i$, i=1...m, wherein records within respective ones of the clusters represent the same entity;
    constructing a new instance D" with a new relation schema R", wherein the new relation schema R" is the same as the relation schema R with the addition of a new duplicate identification attribute D_id wherein D_id is set to i for each record in its corresponding cluster $C_i$; and
    merging duplicate records in the new instance D" in dependence on the functional dependencies of a new set of constraints $\Sigma$" = $\Sigma \cup$ {FD : D_id $\rightarrow$ attr(R)} without changing the attribute D_id.

4.  The computer program embedded on a non-transitory tangible computer readable storage medium as claimed in claim 3 further comprising instructions that, when executed by the processor, implement a method for updating a database, wherein the modified database instance does not include the duplicate identification attribute.

5.  Apparatus for modifying records in a database, comprising:

    a duplicate detection engine operable to determine duplicate records in a first database instance D over a first relation schema R with attributes attr(R) and with a set of functional dependency constraints $\Sigma$ using a deduplication mechanism to group duplicate records into respective clusters $C_i$, i=1...m, wherein records within respective ones of the clusters represent the same entity;
    a functional definition repair engine operable to construct a new instance D" with a new relation schema R", wherein the new relation schema R" is the same as the relation schema R with the addition of a new duplicate identification attribute D_id wherein D_id is set to i for each record in its corresponding cluster $C_i$; and
    a consistency aware repair engine operable to merge duplicate records of the new instance D" in dependence on the functional dependencies of a new set of constraints $\Sigma$" = $\Sigma \cup$ {FD : D_id $\rightarrow$ attr(R)} without changing the attribute D_id.

6.  Apparatus as claimed in claim 5, the functional definition repair engine further operable to repair functional definition violations arising as a result of a previous functional definition repair operation.

**Patentansprüche**

1.  Computerimplementiertes Verfahren zur Reparatur von Datensätzen einer Datenbank, umfassend:

    Bestimmen von Duplikatdatensätzen in einer ersten Datenbankinstanz D über ein erstes Beziehungsschema R mit Attributen attr(R) und mit einem Satz von funktionalen Abhängigkeitsbeschränkungen $\Sigma$ mithilfe eines Deduplizierungsmechanismus, um Duplikatdatensätze in jeweilige Cluster $C_i$, i=1...m zu gruppieren, worin Datensätze innerhalb jeweiliger der Cluster die gleiche Entität repräsentieren;
    Konstruieren einer neuen Instanz D" mit einem neuen Beziehungsschema R", worin das neue Beziehungsschema R" das gleiche wie das Beziehungsschema R mit der Hinzufügung eines neuen Duplikatidentifizierungsattributs D_id ist, worin D_id bei jedem Datensatz in seinem entsprechenden Cluster $C_i$ auf i gesetzt ist; und
    Zusammenführen von Duplikatdatensätzen der neuen Instanz D" in Abhängigkeit von den funktionalen Abhängigkeiten eines neuen Satzes von Beschränkungen $\Sigma$" = $\Sigma \cup$ {FD : D_id -> attr(R)}, ohne das Attribut D_id zu ändern.

2.  Verfahren nach Anspruch 1, worin die modifizierte Datenbankinstanz nicht das Duplikatidentifizierungsattribut beinhaltet.

**3.** Computerprogramm, das in einem nicht-transitorischen, greifbaren computerlesbaren Speichermedium eingebettet ist, wobei das Computerprogramm maschinenlesbare Anweisungen beinhaltet, die, beim Ausführen durch einen Prozessor, ein Verfahren zum Aktualisieren einer Datenbank implementieren, umfassend:

Bestimmen von Duplikatdatensätzen in einer ersten Datenbankinstanz D über ein erstes Beziehungsschema R mit Attributen attr(R) und mit einem Satz von funktionalen Abhängigkeitsbeschränkungen $\Sigma$ mithilfe eines Deduplizierungsmechanismus, um Duplikatdatensätze in jeweilige Cluster $C_i$, i=1...m zu gruppieren, worin Datensätze innerhalb jeweiliger der Cluster die gleiche Entität repräsentieren;

Konstruieren einer neuen Instanz D" mit einem neuen Beziehungsschema R", worin das neue Beziehungsschema R" das gleiche wie das Beziehungsschema R mit der Hinzufügung eines neuen Duplikatidentifizierungsattributs D_id ist, worin D_id bei jedem Datensatz in seinem entsprechenden Cluster $C_i$ auf i gesetzt ist; und

Zusammenführen von Duplikatdatensätzen in der neuen Instanz D" in Abhängigkeit von den funktionalen Abhängigkeiten eines neuen Satzes von Beschränkungen $\Sigma" = \Sigma \cup \{FD : D\_id \rightarrow attr(R)\}$, ohne das Attribut D_id zu ändern.

**4.** Computerprogramm, das in einem nicht-transitorischen, greifbaren computerlesbaren Speichermedium eingebettet ist, nach Anspruch 3, ferner umfassend Anweisungen, die, beim Ausführen durch einen Prozessor, ein Verfahren zum Aktualisieren einer Datenbank implementieren, worin die modifizierte Datenbankinstanz nicht das Duplikatidentifizierungsattribut beinhaltet.

**5.** Vorrichtung zum Modifizieren von Datensätzen in einer Datenbank, umfassend:

eine Duplikat-Erkennungsengine, die betreibbar ist, um Duplikatdatensätze in einer ersten Datenbankinstanz D über ein erstes Beziehungsschema R mit Attributen attr(R) und mit einem Satz von funktionalen Abhängigkeitsbeschränkungen $\Sigma$ mithilfe eines Deduplizierungsmechanismus zu bestimmen, um Duplikatdatensätze in jeweilige Cluster $C_i$, i=1...m zu gruppieren, worin Datensätze innerhalb jeweiliger der Cluster die gleiche Entität repräsentieren;

eine Funktionsdefinitions-Reparaturengine, die betreibbar ist, um eine neue Instanz D" mit einem neuen Beziehungsschema R" zu konstruieren, worin das neue Beziehungsschema R" das gleiche wie das Beziehungsschema R mit der Hinzufügung eines neuen Duplikatidentifizierungsattributs D_id ist, worin D_id bei jedem Datensatz in seinem entsprechenden Cluster $C_i$ auf i gesetzt ist; und

eine konsistenzorientierte Reparaturengine, die betreibbar ist, um Duplikatdatensätze der neuen Instanz D" in Abhängigkeit von den funktionalen Abhängigkeiten eines neuen Satzes von Beschränkungen $\Sigma" = \Sigma \cup \{FD : D\_id \rightarrow attr(R)\}$ zusammenzuführen, ohne das Attribut D_id zu ändern.

**6.** Vorrichtung nach Anspruch 5, wobei die Funktionsdefinitions-Reparaturengine ferner betreibbar ist, um infolge eines vorherigen Funktionsdefinitions-Reparaturvorgangs auftretende Funktionsdefinitionsverstöße zu beheben.

**Revendications**

**1.** Méthode mise en oeuvre par ordinateur permettant de réparer des enregistrements d'une base de données, consistant à :

déterminer des enregistrements en double dans une première instance de base de données D sur un premier schéma relationnel R avec des attributs attr(R) et avec un ensemble de contraintes de dépendance fonctionnelle $\Sigma$ en utilisant un mécanisme de déduplication pour grouper des enregistrements en double dans des groupes respectifs $C_i$, i=1...m, dans lequel des enregistrements au sein des groupes respectifs représentent la même entité ;

construire une nouvelle instance D" avec un nouveau schéma relationnel R", dans lequel le nouveau schéma relationnel R" est le même que le schéma relationnel R avec l'ajout d'un nouvel attribut d'identification en double D_id dans lequel D_id est réglé sur i pour chaque enregistrement dans son groupe correspondant $C_i$ ; et

fusionner des enregistrements en double de la nouvelle instance D" en fonction des dépendances fonctionnelles d'un nouvel ensemble de contraintes $\Sigma" = \Sigma \cup \{FD : D\_id \rightarrow attr(R)\}$ sans changer l'attribut D_id.

**2.** Procédé selon la revendication 1, dans lequel l'instance de base de données modifiée n'inclut pas l'attribut d'identification en double.

**3.** Programme informatique intégré sur un support de stockage lisible par ordinateur tangible et non transitoire, le programme informatique incluant des instructions lisibles par machine qui, lorsqu'elles sont exécutées par un processeur, mettent en oeuvre un procédé permettant de mettre à jour une base de données consistant à :

déterminer des enregistrements en double dans une première instance de base de données D sur un premier schéma relationnel R avec des attributs attr(R) et avec un ensemble de contraintes de dépendance fonctionnelle $\Sigma$ en utilisant un mécanisme de déduplication pour grouper des enregistrements en double dans des groupes respectifs $C_i$, i=1 ...m, dans lequel des enregistrements au sein des groupes respectifs représentent la même entité ;
construire une nouvelle instance D" avec un nouveau schéma relationnel R", dans lequel le nouveau schéma relationnel R" est le même que le schéma relationnel R avec l'ajout d'un nouvel attribut d'identification en double D_id dans lequel D_id est réglé sur i pour chaque enregistrement dans son groupe correspondant $C_i$ ; et fusionner des enregistrements en double dans la nouvelle instance D" en fonction des dépendances fonctionnelles d'un nouvel ensemble de contraintes $\Sigma" = \Sigma \cup \{FD : D\_id \rightarrow attr(R)\}$ sans changer l'attribut D_id.

**4.** Programme informatique intégré sur un support de stockage lisible par ordinateur tangible et non transitoire selon la revendication 3 comprenant en outre des instructions qui, lorsqu'elles sont exécutées par le processeur, mettent en oeuvre un procédé permettant de mettre à jour une base de données, dans lequel l'instance de base de données modifiée n'inclut pas l'attribut d'identification en double.

**5.** Appareil permettant de modifier des enregistrements dans une base de données, comprenant :

un moteur de détection de doublons servant à déterminer des enregistrements en double dans une première instance de base de données D sur un premier schéma relationnel R avec des attributs attr(R) et avec un ensemble de contraintes de dépendance fonctionnelle $\Sigma$ en utilisant un mécanisme de déduplication pour grouper des enregistrements en double dans des groupes respectifs $C_i$, i=1...m, dans lequel des enregistrements au sein des groupes respectifs représentent la même entité ;
un moteur de réparation de définition fonctionnelle servant à construire une nouvelle instance D" avec un nouveau schéma relationnel R", dans lequel le nouveau schéma relationnel R" est le même que le schéma relationnel R avec l'ajout d'un nouvel attribut d'identification en double D_id dans lequel D_id est réglé sur i pour chaque enregistrement dans son groupe correspondant $C_i$ ; et
un moteur de réparation sensible à la cohérence servant à fusionner des enregistrements en double de la nouvelle instance D" en fonction des dépendances fonctionnelles d'un nouvel ensemble de contraintes $\Sigma" = \Sigma \cup \{FD : D\_id \rightarrow attr(R)\}$ sans changer l'attribut D_id.

**6.** Appareil selon la revendication 5, le moteur de réparation de définition fonctionnelle servant en outre à réparer des violations de définition fonctionnelle résultant d'une opération de réparation de définition fonctionnelle précédente.

| D | Name | AC | Phone | Street | City | Zip | State |
|---|---|---|---|---|---|---|---|
| $t_1$ | Robert Brady | 212 | 600-1096 | Charles | NY | 10023 | NY |
| $t_2$ | Bob Brady | 212 | 600-1096 | Charles St. | New Yourk | 10023 | NY |
| $t_3$ | R. Brady | 213 | 600-1096 | W 75th St. | Manhaten | 10023 | PH |
| $t_4$ | Ralf Brady | 213 | 600-1097 | W 75th St. | Manhaten | 98368 | WA |
| $t_5$ | Roy Bradely | 211 | 600-1000 | Richard Rd | Seattle | 98368 | WA |

Dedup → / Repair →

| $D_d$ | Name | AC | Phone | Street | City | Zip | State |
|---|---|---|---|---|---|---|---|
| $t_1\,t_2$ | Robert Brady | 212 | 600-1096 | Charles St. | New Yourk | 10023 | NY |
| $t_3\,t_4$ | Ralf Brady | 213 | 600-1096 | W 75th St. | Manhaten | 10023 | WA |
| $t_5$ | Roy Bradely | 211 | 600-1000 | Richard Rd | Seattle | 98368 | WA |

| $D_r$ | Name | AC | Phone | Street | City | Zip | State |
|---|---|---|---|---|---|---|---|
| $t_1$ | Robert Brady | 212 | 600-1096 | Charles | New Yourk | 10023 | NY |
| $t_2$ | Bob Brady | 212 | 600-1096 | Charles St. | New Yourk | 10023 | NY |
| $t_3$ | R. Brady | 212 | 600-1096 | Charles St. | New Yourk | 10023 | NY |
| $t_4$ | Ralf Brady | 213 | 600-1097 | W 75th St. | Seattle | 98368 | WA |
| $t_5$ | Roy Bradely | 211 | 600-1000 | Richard Rd | Seattle | 98368 | WA |

Repair ↓

| $D_{dr}$ | Name | AC | Phone | Street | City | Zip | State |
|---|---|---|---|---|---|---|---|
| $t_1\,t_2$ | Robert Brady | 212 | 600-1096 | Charles St. | New Yourk | 10023 | NY |
| $t_3\,t_4$ | Ralf Brady | 212 | 600-1096 | Charles St. | New Yourk | 10023 | NY |
| $t_5$ | Roy Bradely | 211 | 600-1000 | Richard Rd | Seattle | 98368 | WA |

Dedup ↓

| $D_{rd}$ | Name | AC | Phone | Street | City | Zip | State |
|---|---|---|---|---|---|---|---|
| $t_1\,t_2\,t_3$ | Robert Brady | 212 | 600-1096 | Charles St. | New Yourk | 10023 | NY |
| $t_4$ | Ralf Brady | 213 | 600-1097 | W 75th St. | Seattle | 98368 | WA |
| $t_5$ | Roy Bradely | 211 | 600-1000 | Richard Rd | Seattle | 98368 | WA |

Dedup ↓

| $D_{drd}$ | Name | AC | Phone | Street | City | Zip | State |
|---|---|---|---|---|---|---|---|
| $t_1\,t_2\,t_3\,t_4$ | Robert Brady | 212 | 600-1096 | Charles St. | New Yourk | 10023 | NY |
| $t_5$ | Roy Bradely | 211 | 600-1000 | Richard Rd | Seattle | 98368 | WA |

Figure 1

Figure 2

225 309 215 223 307 219 303 305 217 301 201

Figure 3

EP 2 742 443 B1

400

430

405

402

405 | 403

407 | 409

401

209

411

413

415

417

419

421

399

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOLLAYUT KAEWBUADEE.** Yaowadee Temtana-pat and Ratchata Peachavanish. *DATA CLEANING USING FD FROM A DATA MINING PROCESS,* 16 May 2006